# EUROPÄISCHE PATENTANMELDUNG

(11) **EP 1 158 310 A1**
(43) Veröffentlichungstag der Anmeldung: **28.11.2001**
(21) Anmeldenummer: 01111412.1
(22) Anmeldetag: 14.06.2000
(51) Int. Cl.: G01S 11/14, B66B 1/34

(54) **Einrichtung zur Positionserfassung**

(30) Priorität: 30.06.1999 DE 19929984
(62) Teilanmeldung aus: 00112544.2
(71) Anmelder: K.A. SCHMERSAL GmbH & Co., D-42279 Wuppertal (DE)
(72) Erfinder: Hoepken, Hermann, 45549 Sprockhövel (DE); Türk, Stefan, Dr., 42117 Wuppertal (DE); Strick, Holger, 42279 Wuppertal (DE)
(74) Vertreter: Sparing - Röhl - Henseler Patentanwälte

(57) **Zusammenfassung**

Die Erfindung betrifft eine Einrichtung zur Positionserfassung eines längs eines vertikalen Schachtes (1) beweglichen Aufzugkorbs (2), mit einem im Schacht (1) lotrecht gespannten Schallsignalleiter (3) sowie mit einem mit einem Signalgeber (8) verbundenen, an dem Aufzugkorb (2) befindlichen Signaleinkoppler (9) zum Einkoppeln eines Schallsignals in den Schallsignalleiter (3), wobei benachbart zu wenigstens einem Ende des Schallsignalleiters (3) ein Signalauskoppler (10) angeordnet ist, der mit einer Auswerteschaltung (11) zur Erzeugung eines für die momentane Position des Aufzugkorbs (2) repräsentativem Signal verbunden ist. Hierbei weist der Schallsignalleiter (3) gegebenenfalls zumindest an einem Ende einen Schallsignaldämpfer (6, 6') auf und ist der Signaleinkoppler (9) durch die Auswerteschaltung (11) in Zeitabständen triggerbar, die so groß sind, daß keine Überlagerungen mit vorherigen, vom Signaleinkoppler (9) eingekoppelten und anschließend an den Enden des Schallsignalleiters (3) reflektierten Schallsignalen auftreten.

## Beschreibung

Die Erfindung betrifft eine Einrichtung zur Positionserfassung nach dem Oberbegriff des Anspruchs 1.

Aus EP-A-0 694 792 ist eine derartige Einrichtung zur Positionserfassung eines beweglichen Gegenstandes bekannt, die einen sich entlang eines Verfahrwegs erstreckenden Schallsignalleiter sowie einen mit einem Signalgeber verbundenen, an dem beweglichen Gegenstand befindlichen Signaleinkoppler zum Einkoppeln eines Schallsignals in den Schallsignalleiter aufweist. Hierbei sind an beiden Enden des Schallsignalleiters Signalauskoppler angeordnet, die jeweils mit einem Zähler verbunden sind, wobei die beiden Zähler über einen Taktgeber getaktet und mit einem Subtrahierer für die Ausgangssignale der beiden Zähler verbunden sind. Das Ausgangssignal des Subtrahierers ist als Maß für die Laufzeitdifferenz des eingekoppelten Schallsignals von der Entkopplungsstelle zu den Signalauskopplern von einer Auswerteeinheit zu einem Signal verarbeitbar, das für die momentane Position des beweglichen Gegenstandes auf dem Verfahrweg repräsentativ ist, wobei der Signaleinkoppler mit einer Signalabstandszeit arbeitet, die größer als die Schallaufzeit von einem Ende des Verfahrwegs zum anderen ist. Abgesehen davon, daß das Vorsehen von zwei Auswerteeinheiten aufwendig ist, können Störungen durch an den Enden des Schallsignalleiters reflektierten Schallsignalen hervorgerufen werden.

Aus US-A-4 238 844 ist eine ähnliche Einrichtung zur Positionserfassung eines beweglichen Gegenstandes bekannt, bei der neben Ausführungsformen, die einen Signalauskoppler an beiden Enden des Schallsignalleiters bzw. einen solchen an einem Ende zusammen mit einem längs des Schallsignalleiters beweglichen Signalauskoppler verwenden, gemäß einer Ausführungsform an einem Ende des rohrförmig ausgebildeten Schallsignalleiters, der beidseitig in Vibrationsdämpfungsmaterial gelagert ist, damit keine Schwingungen von außen auf den Schallsignalleiter übertragen werden, ein Signalauskoppler mit einer zugehörigen Auswerteeinheit angeordnet ist, wobei sowohl das direkt ankommende als auch das am anderen Ende des Schallsignalleiters reflektierte Schallsignal empfangen und zur Positionsbestimmung auswertet wird.

Aufgabe der Erfindung ist es, eine Einrichtung zur Positionserfassung nach dem Oberbegriff des Anspruchs 1 zu schaffen, die es ermöglicht, Störungen durch reflektierte Schallsignale zu vermeiden.

Diese Aufgabe wird entsprechend dem kennzeichnenden Teil des Anspruchs 1 gelöst.

Dadurch, daß die vorliegende Einrichtung einen Schallsignalleiter, der zumindest an einem Ende einen Schallsignaldämpfer aufweist, und einen Signaleinkoppler umfaßt, der durch eine Auswerteschaltung eines Signalauskopplers in Zeitabständen triggerbar ist, die so groß sind, daß keine Überlagerungen mit vorherigen, vom Signaleinkoppler eingekoppelten und anschließend an den Enden des Schallsignalleiters reflektierten Schallsignalen auftreten, werden Störungen etwa in Form von Interferenzen durch reflektierte Schallsignale, die die Genauigkeit der Positionsbestimmung eines Aufzugkorbs beeinträchtigen könnten, vermieden.

Weitere Ausgestaltungen der Erfindung sind der nachfolgenden Beschreibung und den Unteransprüchen zu entnehmen.

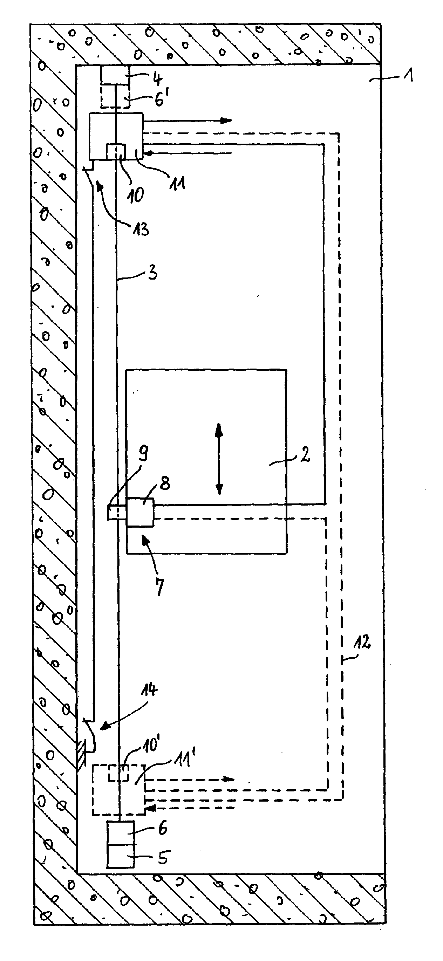

Die Erfindung wird nachstehend anhand von in der beigefügten Abbildung schematisch dargestellten Ausführungsbeispielen näher erläutert.

In einem Schacht 1 ist ein (nicht im einzelnen dargestellter) in diesem vertikal verfahrbarer Aufzug mit einem Aufzugkorb 2 vorgesehen. Außerdem befindet sich in dem Schacht 1 ein Schallsignalleiter 3, der über eine Aufhängung 4 am Schachtkopf mechanisch befestigt ist, während ein Gewicht 5 zusammen mit einem Dämpfer 6 am unteren Ende des sich im wesentlichen über die Höhe des Schachtes 1 erstreckenden Schallsignalleiters 3 den Schallsignalleiter 3 spannt und lotrecht im Schacht 1 hält.

Der metallische, magnetostriktive Schallsignalleiter 3 besitzt eine vorbestimmte, im wesentlichen gleichmäßige Schallausbreitungsgeschwindigkeit und ist insbesondere ein Metalldraht, der zweckmäßigerweise einen Durchmesser in der Größenordnung von etwa 1 mm besitzt.

Der Aufzugkorb 2 ist mit einer Sendeeinheit 7 für ein Schallsignal im Ultraschallbereich versehen, die einen Signalgeber 8 und einen am Aufzugkorb 2 befindlichen Signaleinkoppler 9 zum Einkoppeln des Schallsignals in den Schallsignalleiter 3 aufweist. Ein von letzterem eingekoppeltes Schallsignal breitet sich zu beiden Enden des Schallsignalleiters 3 hin aus und wird dort jeweils reflektiert sowie beim Durchlaufen des Dämpfers 6 durch diesen gedämpft.

Benachbart zu einem Ende des Schallsignalleiters 3, dargestellt benachbart zum oberen Ende, ist ein Signalauskoppler 10 vorgesehen, der mit einer Auswerteschaltung 11 zur Erzeugung eines für die momentane Position des Aufzugkorbs 2 repräsentativem Signal verbunden ist.

Die Auswerteschaltung 11 dient dazu, die Schallaufzeitmessung und die Positionsberechnung des Aufzugkorbs 2 durchzuführen sowie die Ausgabe der Position des Aufzugkorbs 2 gegebenenfalls mit extrapolierten Zwischenpositionen zwischen den tatsächlich gemessenen auszugeben.

Die Auswerteschaltung 11, die vorzugsweise auch einen Mikroprozessor umfaßt, dient zusätzlich dazu, die Sendeeinheit 7 zu triggern, d.h. dazu zu veranlassen, ein Schallsignal in den Schallsignalleiter 3 einzukopplen. Der entsprechende Triggerimpuls kann hierbei über ein Schleppkabel des Aufzugkorbs 2 übermittelt werden. Er kann aber auch über einen Lichtleiter und Optokoppler oder über Funk übermittelt werden, wobei bei letzterer der Schallsignalleiter 3 als Antenne für eine den Schallsignalleiter 3 umgreifende, am Aufzugkorb 2 befestigte Empfangsspule dienen kann.

Um Überlagerungen von Schallwellen erster Ordnung zu vermeiden, wird der Triggerimpulszyklus zeitlich so gewählt, daß die eingekoppelten Schallwellen mindestens einmal gedämpft werden, d.h. daß sowohl die zum oberen Ende des Schallsignalleiters 3 laufende und dort reflektierte, als auch die zum unteren Ende des Schallsignalleiters 3 laufende Schallwelle jeweils mindestens einmal gedämpft werden. Hierdurch wird erreicht, daß die Schallwellenenergie infolge entsprechender Dämpfung so gering wird, daß ein hierdurch verursachter Fehler infolge Überlagerung der verbliebenen Restwelle mit einer neu eingekoppelten Schallwelle nicht mehr berücksichtigt werden muß. (Eine Restwelle wird dann nicht mehr als störend angesehen, wenn ihre Schallwellenenergie unter etwa 10%, vorzugsweise unter etwa 5% ihres ursprünglichen Wertes gesunken ist.)

Dies kann dadurch erreicht, daß man einen genügend großen, aber konstanten Triggerimpulszyklus wählt, so daß der zeitliche Abstand der Triggerimpulse und damit der Schallwelleneinkopplungen so groß ist, daß bei jeder Einkopplung keine Schallwellen erster Ordnung von einer vorherigen Schallsignaleinkopplung mehr im Schallsignalleiter 3 vorhanden sind.

Entsprechend der vorgesehenen Ortsauflösung und der festliegenden Schallausbreitungsgeschwindigkeit im Schallsignalleiter 3 von ca. 4700 m/s wird dadurch allerdings die Förderhöhe des Aufzugs, für die ein konstanter Triggerimpulszyklus anwendbar ist, beschränkt. Bei einem eine gute Ortsauflösung von aufeinanderfolgenden Meßwerten liefernden Triggerimpulszyklus von etwa 40 ms ergibt sich beispielsweise eine maximale Förderhöhe von etwa 60 m.

Dies läßt sich jedoch auch auf größeren Förderhöhen anwenden, wenn man auch am oberen Ende des Schallsignalleiters 3 einen Dämpfer 6' anordnet, da dann die maximale Laufzeit des Schallsignals bis zu den Dämpfern 6, 6' entsprechend verkürzt wird.

Eine weitere Möglichkeit, die zu größeren Förderhöhen führt, besteht darin, keinen konstanten Triggerzyklus zu verwenden, sondern die Abstände zwischen den Triggerimpulsen entsprechend der Position des Aufzugkorbs 2, die der Auswerteschaltung 11 aufgrund der vorherigen Messung extrapolativ bekannt ist, derart zu wählen, daß keine störende, d.h. keinen berücksichtigungswerten Einfluß auf das Meßergebnis besitzende, endseitig am Schallsignalleiter 3 reflektierte Restwelle während des Einkoppelns einer neuen Schallwelle durch den Signaleinkoppler 10 läuft. Hierbei ist es ebenfalls zweckmäßig, an beiden Enden des Schallsignalleiters 3 die Dämpfer 6, 6' zu verwenden.

Um eventuelle weitere Störsignale, die auch aus anderen Quellen stammen können, auszuschalten, kann vorgesehen sein, mittels der Auswerteschaltung 11 entsprechend der Position des Aufzugkorbs 2, die durch Auswertung des vom Signalauskoppler 10 empfangenen Signals berechnet wurde, ein relativ enges Zeitfenster zu bestimmen, in dem das erneut, d.h. das zuletzt eingekoppelte Schallsignal am Signalauskoppler 10 zu erwarten ist, wobei der Signalauskoppler 10 nur während des Zeitfensters aktiviert ist. Hierdurch werden außerhalb des Zeitfensters ankommende Störsignale ausgeblendet.

Das Zeitfenster kann beim Einschalten der Einrichtung relativ groß gewählt und im Rahmen nachfolgender Positionsbestimmungen immer mehr eingeengt werden, so daß es schließlich beispielsweise auf etwa die vier- bis achtfache Impulsbreite der Schallsignale eingeengt ist.

Gegebenenfalls ist es auch zweckmäßig, am jeweils anderen Ende des Schallsignalleiters 3 einen weiteren Signalauskoppler 10' und eine weitere Auswerteeinheit 11' vorzusehen. Hierdurch läßt sich die Positionsbestimmung des Aufzugkorbs 2 zweikanalig, d.h. redundant vornehmen. Insbesondere ist es hierbei zweckmäßig, wenn die Auswerteeinheiten 11, 11' abwechselnd den Signaleinkoppler 9 triggern, wodurch gleichzeitig die Funktionsfähigkeit der Auswerteeinheiten 11, 11' geprüft wird. Außerdem ist es hierbei zweckmäßig, über eine Kommunikationsleitung 12 zwischen den beiden Auswerteeinheiten 11, 11' die berechneten Werte der Positionsbestimmung der jeweils anderen Auswerteeinheit zwecks Vergleichs zu übermitteln, um auch so die Funktionsfähigkeit der Einrichtung zu überprüfen. Schließlich kann bei Ausfall einer Auswerteeinheit 11, 11' die Einrichtung mit der funktionsfähig verbliebenen arbeiten und eine entsprechende Fehlermeldung veranlassen.

Im Schacht 1 können mindestens zwei Schalter 13, 14 vorgesehen sein, die beim Überfahren durch den Aufzugkorb 2 betätigt werden und dabei ein Signal an die Auswerteeinheit 11 liefern. Letztere speichert beispielsweise eine Tabelle bezüglich der Punkte des Überfahrens der Schalter 13, 14 bei einer bestimmten Temperatur von beispielsweise 20°C. Die Positionsbestimmung wird dann entsprechend den Abweichungen von dieser Tabelle korrigiert, wodurch Längenänderungen eines den Schacht 1 aufweisenden Gebäudes in ihren Auswirkungen auf die Positionsbestimmung des Aufzugkorbs 2 berücksichtigt werden können.

Die beiden Schalter 13, 14 sind in dem dargestellten Ausführungsbeispiel als Öffner in Serienschaltung vorgesehen. Möglich ist aber auch eine Parallelschaltung mit den Schaltern 13, 14 als Schließer. Auch der Einzelanschluß der Schalter 13, 14 ist möglich. Wenn zwei Auswerteeinheiten 11, 11' vorgesehen sind, kann ein Teil der Schalter 13, 14 auch mit einer Auswerteeinheit 11 und der andere Teil mit der anderen Auswerteeinheit 11' gekoppelt sein.

## Patentansprüche

1. Einrichtung zur Positionserfassung eines längs eines vertikalen Schachtes (1) beweglichen Aufzugkorbs (2), mit einem im Schacht (1) lotrecht gespannten Schallsignalleiter (3) mit vorbestimmter, im wesentlichen gleichmäßiger Schallausbreitungsgeschwindigkeit sowie mit einem mit einem Signalgeber (8) verbundenen, an dem Aufzugkorb (2) befindlichen Signaleinkoppler (9) zum Einkoppeln eines Schallsignals in den Schallsignalleiter (3), wobei benachbart zu wenigstens einem Ende des Schallsignalleiters (3) ein Signalauskoppler (10) angeordnet ist, der mit einer Auswerteschaltung (11) zur Erzeugung eines für die momentane Position des Aufzugkorbs (2) repräsentativem Signal verbunden ist, **dadurch gekennzeichnet, daß** der Signaleinkoppler (9) durch die Auswerteschaltung (11) in Zeitabständen triggerbar ist, die so groß sind, daß keine Überlagerungen mit vorherigen, vom Signaleinkoppler (9) eingekoppelten und anschließend an den Enden des Schallsignalleiters (3) reflektierten Schallsignalen auftreten.

2. Einrichtung nach Anspruch 1, **dadurch gekennzeichnet, daß** der Signaleinkoppler (9) mit einer konstanten Triggerimpulsfrequenz mit so großem Zeitabstand triggerbar ist, daß die eingekoppelten Schallsignale mindestens einmal gedämpft werden.

3. Einrichtung nach Anspruch 1, **dadurch gekennzeichnet, daß** mittels der Auswerteschaltung (11) entsprechend der Position des Aufzugkorbs (2), durch Auswertung des vom Signalauskoppler (10) empfangenen Signals berechnet, ein Zeitintervall bestimmbar ist, in dem keine an den Enden des Schallsignalleiters (3) einmal reflektierten Schallsignale mit einem erneut eingekoppelten Schallsignal kollidieren können, und der Signaleinkoppler (9) von der Auswerteschaltung (11) nach Ablauf dieses Zeitintervalls zum erneuten Einkoppeln eines Schallsignals triggerbar ist.

4. Einrichtung nach einem der Ansprüche 1 bis 3, **dadurch gekennzeichnet, daß** mittels der Auswerteschaltung (11) entsprechend der Position des Aufzugkorbs (2), durch Auswertung des vom Signalauskoppler (10) empfangenen Signals berechnet, ein Zeitfenster bestimmbar ist, in dem das erneut eingekoppelte Schallsignal zu erwarten ist, und daß der Signalauskoppler (10) nur während des Zeitfensters aktiviert ist.

5. Einrichtung nach einem der Ansprüche 1 bis 4, **dadurch gekennzeichnet, daß** benachbart zu beiden Enden des Schallsignalleiters (3) jeweils ein Signalauskoppler (10, 10') mit einer Auswerteschaltung (11, 11') angeordnet ist.

6. Einrichtung nach Anspruch 5, **dadurch gekennzeichnet, daß** die Auswerteschaltungen (11, 11') abwechselnd den Signaleinkoppler (9) triggern.

7. Einrichtung nach Anspruch 5 oder 6, **dadurch gekennzeichnet, daß** die von den Auswerteschaltungen (11, 11') berechneten Positionswerte des Aufzugkorbs (2) miteinander verglichen werden.

8. Einrichtung nach einem der Ansprüche 1 bis 7, **dadurch gekennzeichnet, daß** das Triggern des Signaleinkopplers (9) über ein Schleppkabel des Aufzugkorbs (2) vornehmbar ist.

9. Einrichtung nach einem der Ansprüche 1 bis 7, **dadurch gekennzeichnet, daß** das Triggern des Signaleinkopplers (9) über einen Lichtleiter vornehmbar ist.

10. Einrichtung nach einem der Ansprüche 1 bis 7, **dadurch gekennzeichnet, daß** das Triggern des Signaleinkopplers (9) über den Schallsignalleiter (3) als Antenne und eine hiermit zusammenwirkende Empfangsspule des Signaleinkopplers (9) vornehmbar ist.

11. Einrichtung nach einem der Ansprüche 1 bis 10, **dadurch gekennzeichnet, daß** mindestens zwei im Schacht (1) fest angeordnete, vom Aufzugkorb (2) bei dessen Verfahren betätigbare Schalter (13, 14) vorgesehen sind, deren Positionen bei einer bestimmten Temperatur in der Auswerteschaltung (11, 11') gespeichert sind, die die Positionsbestimmung des Aufzugkorbs (2) dementsprechend eicht.

12. Einrichtung nach einem der Ansprüche 1 bis 11, **dadurch gekennzeichnet, daß** der Schallsignalleiter (3) zumindest an einem Ende einen Schallsignaldämpfer (6, 6') aufweist,
